# EUROPEAN PATENT APPLICATION

(11) **EP 0 626 419 A1**
(43) Date of publication of application: **30.11.1994**
(21) Application number: 94303556.8
(22) Date of filing: 18.05.1994
(51) Int. Cl.: C08J 3/22, C08K 13/02

(54) **ABS compatible resin/binder carrier for dry free flowing colorant premixes**

(30) Priority: 26.05.1993 US 67773
(71) Applicant: GENERAL ELECTRIC COMPANY, Schenectady, NY 12345 (US)
(72) Inventor: Rake, Robert B., Vienna, West Virginia 26105 (US); Haught, Michael D., West Virginia 26101-9801 (US); Steege, Gerald W., West Virginia 26104-2228 (US)
(74) Representative: Pratt, Richard Wilson

(57) **Abstract**

Blends of colorants with styrene-acrylonitrile types of copolymers are rendered homogenous by the presence of a low molecular weight ester. The blends are useful as color concentrates for let down into acrylonitrile-butadiene-styrene graft copolymer compositions. The blends resist separation of the colorant from copolymers.

## Description

### BACKGROUND OF THE INVENTION

### Field of the Invention

The invention relates to thermoplastic color concentrate compositions which are blends of a thermoplastic resin and a colorant, and more particularly relates to thermoplastic color concentrate composition which are blends of a styrene-acrylonitrile copolymer and an organic colorant.

### Brief Description of the Related Art

Blends of a thermoplastic styrene-acrylonitrile copolymer and a colorant have been previously used as color concentrates for let down into natural color thermoplastic materials. However, such blends can experience separation of the colorants from the thermoplastic resin during transport, fluidization or during rest under vibratory conditions. Additionally, these prior blends can experience uneven distribution of the colorants dispersed therein which can result in surface blemishes in the final molded parts obtained after let down of the color concentrate blends into additional thermoplastic resin.

Consequently, there is a need for providing color concentrate compositions in the form of blends of styrene-acrylonitrile copolymers with colorants wherein the compositions exhibit homogeneity as evidenced by uniform dispersal of colorant in the styrene-acrylonitrile copolymer, and which exhibit resistance to separation of the colorant from the styrene acrylonitrile copolymer during transport, fluidization or during rest under vibratory conditions.

### Summary of the Invention

The invention provides a thermoplastic color concentrate composition, which comprises a blend of:
a thermoplastic resin, preferably a styrene-acrylonitrile copolymer;
a colorant, preferably an organic colorant; and
a low molecular weight ester having a molecular weight of between 200 and 1000 gram per mol, and more preferably an alkyl aryl phthalate.

The thermoplastic color concentrate compositions are ternary blends characterized in part by homogeneity of the composition and uniform dispersal of the colorant therein, and resistance to separation of the colorant from the thermoplastic resin upon experience to vibratory conditions. The compositions are useful for let down into natural color thermoplastic materials so as to provide the desired colored molding resin for making molded thermoplastic articles, or extruded articles, requiring defect free surface appearance and uniform color over large quantities of colored thermoplastic.

### Detailed Description of the Preferred Embodiments of the Invention

The thermoplastic resin composition of the present invention is useful as a color concentrate (colorant premix) for uniform coloration upon let down into natural color thermoplastic molding and extrusion materials. The composition is in the form of a blend comprising a thermoplastic resin, a colorant and a low molecular weight ester. The thermoplastic resin is preferably a vinyl aromatic-unsaturated nitrile copolymer.

The copolymers of a styrene type of monomer and an acrylonitrile type of monomer employed as components of resin blends of the invention include those sometimes referred to in the art as "SAN types of polymers". The "SAN types of Polymers" are a wide variety of polymers, the molecules of which contain two or more monomeric parts that are copolymerized. One monomer or group of monomers that may be copolymerized and referred to above as styrene types of monomer are monovinylaromatic hydrocarbons. The monovinylaromatic monomers may be generically described by the formula: 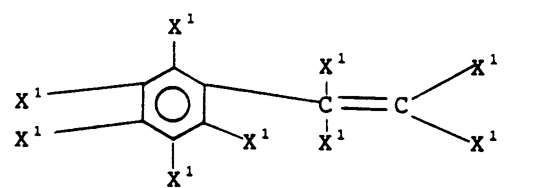
wherein X¹ is selected from the group consisting of hydrogen, alkyl of 1-5 carbon atoms, chlorine or bromine. Examples of the monovinylaromatic compounds and alkyl-, cycloalkyl-, aryl-, alkaryl-, aralkyl-, alkoxy-, aryloxy-, and other substituted vinylaromatic compounds include styrene, 4-methylstyrene, 3,5-diethylstyrene, 4-n-propylstyrene, α-methylstyrene, α-methyl vinyltoluene, β-chlorostyrene, β-bromostyrene, dichlorostyrene, dibromostyrene, tetra-chlorostyrene, mixtures thereof, and the like. The preferred monovinylaromatic hydrocarbons used are styrene and/or α-methylstyrene and p-methylstyrene.

The second group of monomers, i.e.; the acrylonitrile type that may be polymerized in preparing the SAN type of copolymer are vinyl unsaturated nitrile monomers such as acrylonitrile, and substituted acrylonitrile. Optionally, minor amounts of acrylic acid esters, or methyl acrylic esters exemplified by alkyl acrylates such as methyl methacrylate may be employed in the copolymer, or the copolymers can be free of such additional monomer.

The unsaturated nitriles, including acrylonitrile and substituted acrylonitriles, are described generically by the formula: 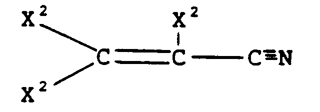
wherein X² is selected from the components set out above for X¹. Examples of such monomers include ethacrylonitrile, methacrylonitrile, α-chloroacrylonitrile, β-chloroacrylonitrile, α-bromoacrylonitrile, and β-bromoacrylonitrile.

The most preferred SAN copolymers employed in the blend composition of the invention contain 20-35 percent arylonitrile segments (by weight) and 80-65% styrene or alkyl-substituted styrene or mixtures thereof, segments (by weight).

The SAN copolymers may be impact-modified by addition or copolymerization with butadiene, acrylate or ethylene-propylene types of rubbers. More specific examples of impact modified SAN types of copolymers found advantageous in preparing the blend compositions of the invention are:
1. acrylonitrile-butadiene-styrene (ABS);
2. acrylate-styrene-acrylonitrile (AAS) or (ASA); and
3. olefin-styrene-acrylonitrile (AOS), (OSA) or (AES)
these impact-modified copolymers may be made by blending or grafting technology well known to those skilled in the art.

The SAN copolymer is optionally prepared by polymerizing a conjugated diene, such as butadiene or a conjugated diene with a monomer copolymerizable therewith, such as styrene, to provide a polymeric backbone. After formation of the backbone, at least one grafting monomer, and preferably two, such as the styrene type of monomer and/or the acrylonitrile type of monomer described above are polymerized in the presence of the prepolymerized backbone to obtain the graft polymer. These resins are prepared by methods well known in the art.

The backbone polymer, as mentioned, is preferably a conjugated diene polymer such as polybutadiene, polyisoprene, or a copolymer, such as butadiene-styrene, butadiene-acrylonitrile, or the like. The specific conjugated diene monomers normally utilized in preparing the backbone of the graft polymer are generically described by the formula: 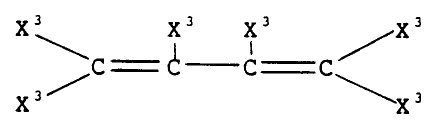
wherein X³ is selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethyl-1,3-butadiene, 2-ethyl-1,3-pentadiene; 1,3-and 2,4-hexadienes, chloro and bromo substituted butadienes such as dichlorobutadiene, bromobutadiene, dibromobutadiene, mixtures thereof, and the like. A preferred conjugated diene is butadiene.

In the preparation of the preferred graft copolymer, the conjugated diolefin polymer or copolymer exemplified by a 1,3-butadiene polymer or copolymer comprises about 50% by weight of the total graft polymer composition. The monomers polymerized in the presence of the backbone, exemplified by styrene and acrylonitrile, comprise from about 40 to about 95% by weight of the total graft polymer composition.

In preparing the impact-modified SAN polymer, it is normal to have a certain percentage of the polymerizing monomers that are grafted on the backbone combine with each other and occur as a free copolymer. If styrene is utilized as one of the grafting monomers and acrylonitrile as the second grafting monomer, a certain portion of the composition will copolymerize as free (non-grafted) styrene-acrylonitrile copolymer. In the case where α-methylstyrene (or other monomer) is substituted for the styrene in the composition used in preparing the graft polymer, a certain percentage of the composition may be an α-methylstyrene-acrylonitrile copolymer. Also, there are occasions where a copolymer, such as α-methylstyrene-acrylonitrile, is added to the graft polymer copolymer blend. When a graft is the polymer-copolymer blend referred to herein, it is meant optionally to include at least one copolymer blended with the graft polymer composition and which may contain up to 90% of free copolymer.

Optionally, the elastomeric backbone of the graft copolymers may be an acrylate rubber, such as one based on n-butyl acrylate, ethylacrylate, 2-ethylhexylacrylate, and the like. Additionally, minor amounts of a diene may be copolymerized in the acrylate rubber backbone to yield improved grafting with the matrix polymer. These resins are well known in the art and many are commercially available. The elastomeric backbone of the graft copolymer may also optionally be an ethylene-propylene or ethylene-propylenediene rubber.

The thermoplastic resin is preferably a copolymer consisting of styrene and acrylonitrile in a weight ratio of styrene to acrylonitrile between 72:28 and 75:25. The copolymer has physical properties which permits mixing of the copolymer, colorant and low molecular weight ester at temperatures not exceeding 160°F, thereby avoiding damage of the crystal structure of the organic colorants.

The colorants may be in the form of organic or inorganic colorants. Suitable colorants include the following chemical type colorants: heterocyclic dyes, cadmium sulfide, xanthane, perinone, quinoline, nickel titanate, lead chromate, anthraquinone, polymethine, azo dyes, (ticrsb)02 compounds, disazo colorant, mercury cadmium sulfide, quinacradone, acid azo barium salt, cobalt aluminate, cobalt chromate, ultramarine, phthalocyanine, ferric oxide, perylene, thioxanthene, carbon black, manganese pyro phosphate, tio2, aluminum flake, muscovite, chrome pigments, chrome dyes, cadmium colorants, titanium colorants, aluminum colorants. The metal compounds may be more broadly referred to as metal colorants.

The low molecular weight ester component of the present blend compositions provides for uniform dispersal of the colorant within the thermoplastic resin and provides for stability/resistance against separation of the colorant from the thermoplastic resin. Thus, the low molecular weight ester provides for protection of the composition against separation of the ingredients during transport, fluidization or rest under vibratory conditions, and thereby provides for a final thermoplastic molding resin following let down of the color concentrate composition into natural color resin, which upon plastication (in a plasticating device such as a Banbury mixer or in an extruder) will yield a molded thermoplastic article which will not exhibit surface defects due to colorant separation in the premix concentrate.

The low molecular weight organic ester has a molecular weight of between 200 grams per mol and 1,000 grams per mol, more preferably between 250 to 500 grams per mol and most preferably between 300 and 400 grams per mol. The low molecular weight ester may be referred to as an oleaginous ester, and may have multiple ester moieties, for example being a monoester, diester, triester or quadester molecule. The ester may have a aliphatic groups and/or aromatic groups, and preferably is an alkyl aryl phthalate. The ester may be selected from the esters of the following formulas: 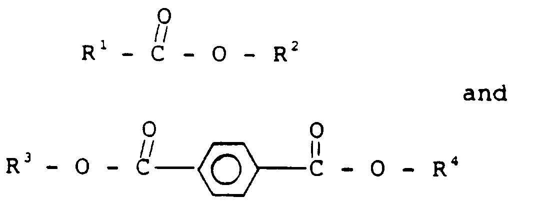
wherein R¹ and R² are independently selected from hydrocarbon radicals having 1 to 20 carbon atoms, and R³ and R⁴ are independently selected from hydrocarbon radicals having between 1 and 20 carbon atoms. Preferably R¹, R², R³ and R⁴ are selected from aliphatic and aromatic radicals. Preferably the low molecular weight ester is an oleaginous liquid at 25°C. Most preferably the low molecular weight ester is butyl benzyl phthalate. Another preferable ester is butyl stearate. As indicated, preferably R¹ is butyl, and R² is a C₄ to C₂₀ alphatic group. Preferably R³ is butyl, and R⁴ is C₆ to C₂₀ aromatic group.

The term "consisting essentially of" herein is meant to mean that the low molecular weight ester functions as the ingredient which effectively maintains the homogeneity of the composition, and which prevents separation of the colorant from the thermoplastic resin. In other words, the term "consisting essentially of" is meant to relate to the basic and novel characteristic of the present composition which is the resistance to separation of the colorant from the thermoplastic resin, by the incorporation of the low molecular weight ester therein. If other additives are present in the composition which, absent the presence of the low molecular weight ester, would prevent separation of the colorant from the thermoplastic resin, then such compositions would be outside the intended meaning of the term "consisting essentially of".

The thermoplastic resin composition is useful as a colorant premix for uniform coloration, let down into a natural color thermoplastic material.

The composition preferably comprises from 35 to 98.5 percent by weight of a thermoplastic resin based on the entire weight of the composition; from 1 to 65 percent by weight of a colorant based on the entire weight of the composition; and from 0.5 to 2 percent by weight of the low molecular weight ester based on the entire weight of the composition. More preferably, the composition comprises from 35 to 98.5 weight percent of the thermoplastic resin, which is preferably a vinyl aromatic-unsaturated nitrile copolymer, based on the total weight of the composition; from 1 to 65 weight percent of a colorant based on the entire weight of the composition; and from 0.5 to 2 weight percent of the low molecular weight ester, which is preferably an alkyl aryl phthalate. Most preferably, the composition comprises from between 40 to 70 percent by weight thermoplastic resin based on the entire weight of the composition; from between 30 and 60 percent by weight colorant based on the entire weight of the composition; and from between 0.75 and 1.5 percent by weight of the low molecular weight ester based on the entire weight of the composition.

Color concentrate compositions differ from the final molding compositions in the amount of colorant present in the composition.

Known stabilizers may also be added, for example, phosphites and hindered phenols.

The thermoplastic resin, colorant and low molecular weight ester may be blended together in a high shear resin mixing vessel containing a mixing blade.

The color concentrate is preferably in the form of a powder, rather than a pellet or other large size particle, so as to permit uniform mixing of the color concentrate into the natural color thermoplastic for uniform coloration of the vinyl molding resin. Preferably the powder has a average mesh screen size between 60 and 200, and more preferably between 75 and 150, based on the weight average particle size.

Weight average particle size distribution will be determined by selective mesh screens of 20, 30, 40, 60, 100, and 200 screen size mesh with relative weight proportions being obtained for each size screening.

Most preferably the color of concentrate composition is used to color natural color ABS plastics, and is preferably let down in a weight ratio of one part by weight color concentrate to between 10 and 100 parts by weight of natural color plastic, which is preferably an acrylonitrile-butadiene-styrene graft copolymer. Utilization of a premix color concentrate assists an uniform distribution of colorant throughout the final molding resin.

## Claims

1. A thermoplastic resin composition useful as a colorant premix for uniform coloration upon let down into a natural color thermoplastic material, said composition comprising:
(a) from 35 to 98.5 percent by weight of a thermoplastic resin, based on the entire weight of the composition,
(b) from 1 to 65 percent by weight of a colorant based on the entire weight of the composition,
(c) from 0.5 to 2 percent by weight of low molecular weight ester based on the entire weight of the composition, said ester having a number average molecular weight of between 200 and 1000 grams/mol.

2. The composition of Claim 1 wherein said thermoplastic resin is a vinyl aromatic polymer.

3. The composition of Claim 1 wherein said colorant is a crystalline organic dye.

4. The composition of Claim 1 wherein said low molecular weight ester is of the formula: 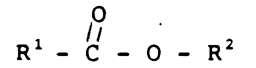 wherein R¹ and R² are independently selected from radicals having from 1 to 20 carbon atoms.

5. The composition of Claim 2 wherein said low molecular weight ester is an oleaginous liquid at 25°C.

6. The composition of Claim 4 wherein R¹ and R² are each alkyl groups.

7. The composition of Claim 1 wherein said low molecular weight ester is of the formula: 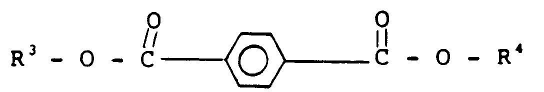 wherein R³ and R⁴ are selected from aliphatic and aromatic radicals.

8. The composition of Claim 7 wherein R³ is an alkyl radical and R⁴ is an aryl radical.

9. The composition of Claim 1 wherein the thermoplastic resin is styrene-arylonitrile copolymer, the colorant is selected from the group consisting of metal compounds and anthraquinones, and said low molecular weight ester is butyl benzyl phthalate.

10. The composition of Claim 1 consisting essentially of said thermoplastic resin, said colorant, and said low molecular weight ester.

11. A thermoplastic resin composition useful as a colorant premix for uniform coloration upon let down into a natural color thermoplastic material, said composition comprising:
(a) from 35 to 98.5 weight percent of a vinyl aromatic-unsaturated nitrile copolymer based on the total weight of the composition,
(b) from 1 to 65 weight percent of a colorant based on the entire weight of the composition, and
(c) from 0.5 to 2 weight percent of an alkyl aryl phthalate.

12. The composition of Claim 11 wherein said alkyl aryl phthalate is butyl benzyl phthalate.

13. The composition of Claim 12 wherein said copolymer is a styrene-acrylonitrile copolymer.

14. The composition of Claim 12 wherein said colorant is a heavy metal compound.

15. The composition of Claim 11 wherein said composition consists essentially of said copolymer, said colorant, and said phthalate.

16. The composition of Claim 11 wherein said composition consists of said copolymer, said colorant, and said phthalate.

17. The composition of Claim 1 wherein said thermoplastic resin is present at a level of between 40 to 70 percent by weight based on the entire weight of the composition, said colorant being present at a level of between 30 and 60 percent by weight based on the entire weight of the composition, and said low molecular weight ester being present at a level of between 0.75 and 1.5 percent by weight based on the entire weight of the composition.

18. The composition of Claim 11 wherein said copolymer is present at a level of from between 40 to 70 percent by weight based on the entire weight of the composition, said colorant is present at a level of from between 30 to 60 percent by weight based on the entire weight of the composition, and said alkyl aryl phthalate is present at a level of from 0.75 to 1.5 percent by weight based on the entire weight of the composition.

19. A process for making a uniform colored thermoplastic article said process comprising:
(a) making a color concentrate composition of a blend of
(i) a thermoplastic resin,
(ii) a colorant,
(iii) a low molecular weight ester having a number molecular weight average of between 200 and 1000 g/mol.;
(b) blending said composition with a thermoplastic material in a weight ratio color concentrate to thermoplastic material of between 1:10 and 1:100 respectively to produce a colored molding resin,
(c) plasticizing said molding resin in a plastication device, and
(d) molding said resin to produce said article.
